# EUROPÄISCHE PATENTANMELDUNG

(11) **EP 4 783 390 A1**
(43) Veröffentlichungstag der Anmeldung: **29.07.2026**
(21) Anmeldenummer: 25153263.6
(22) Anmeldetag: 22.01.2025
(51) Int. Cl.: H02G 3/12

(54) **ELEKTRO-INSTALLATIONSGERÄT UND RASTELEMENT EINES ELEKTRO-INSTALLATIONSGERÄTS**

(71) Anmelder: GIRA Giersiepen GmbH & Co. KG, 42477 Radevormwald (DE)
(72) Erfinder: MAROVAC, Milan, 51647 Gummersbach (DE); BOLT, Anatoli, 40699 Erkrath (DE); LAUSCHER, Cristian, 42115 Wuppertal (DE)
(74) Vertreter: Dr. Solf & Zapf Patent- und Rechtsanwalts PartG mbB

(57) **Zusammenfassung**

Die vorliegende Erfindung betrifft ein Elektro-Installationsgerät (1) mit einem Sockel (2), mit zumindest einem Rastelement (3) und mit einem Tragring (4), sowie ein Rastelement (3) eines solchen Elektro-Installationsgeräts (1). Der Sockel (2) ist mit dem Tragring (4) mittels des Rastelementes (3) lösbar verbindbar oder verbunden, wobei das Rastelement (3) in einem verbundenen Zustand von dem Sockel (2) mit dem Tragring (4) zum Teil in eine Halteaussparung (5) des Tragrings (4) hineinragt, wobei mittels des Sockels (2) ein elektrisches Funktionselement (6) aufgenommen und/oder ausgebildet wird, wobei der Tragring (4) Mittel zur Befestigung in einer Montageöffnung einer Wand eines Gebäudes aufweist, wobei das Rastelement (3) sowohl lösbar mit dem Sockel (2) als auch lösbar mit dem Tragring (4) verbindbar oder verbunden ist, wobei das Rastelement (3) aus Kunststoff hergestellt ist.

## Beschreibung

Die Erfindung betrifft ein Elektro-Installationsgerät nach dem Oberbegriff des Patentanspruchs 1. Die Erfindung betrifft weiterhin ein Rastelement eines solchen Elektro-Installationsgeräts nach dem Oberbegriff des Patentanspruchs 10.

Bekannte Elektro-Installationsgeräte weisen einen Sockel, ein Rastelement und einen Tragring auf. Der Sockel ist mit dem Tragring mittels des Rastelementes lösbar verbindbar oder verbunden. Das Rastelement ragt in einem verbundenen Zustand von dem Sockel mit dem Tragring zum Teil in eine Halteaussparung des Tragrings hinein. Mittels des Sockels wird ein elektrisches Funktionselement aufgenommen und/oder ausgebildet. Der Tragring weist Mittel zur Befestigung in einer Montageöffnung einer Wand eines Gebäudes auf. Der Tragring ist z.B. mit einer Unterputzdose vorzugsweise mittels einer Schraubverbindung verbindbar. Denkbar ist auch, dass der Tragring zur direkten Verbindung mit einer Wand ausgebildet ist. Das Elektro-Installationsgerät ist somit insbesondere als so genanntes Unterputzgerät ausgebildet. Das elektrische Funktionselement kann z.B. als ein Schalter, ein Taster, eine Steckdose, ein Sensor und/oder dergleichen ausgeführt sein.

Es sind Federbereiche aufweisende Rastelemente aus Kunststoff bekannt, die einteilig mit dem Sockel ausgebildet sind. Bei einer Herstellung in einem Spritzgussverfahren werden das Rastelement und der Sockel dann gleichzeitig aus demselben Kunststoff und mit demselben Werkzeug hergestellt. Federenden der Federbereiche sind in einer Einschubrichtung, in welcher der Sockel in den Tragring einschiebbar ist, ausgerichtet. Weiterhin weisen die Federenden einen Abstand zum Sockel auf.

Hierbei ist ein Nachteil, dass, wenn das Rastelement bei der Montage des Sockels beschädigt wird, die Funktion des Rastelementes nicht wiederherstellbar ist und somit das Rastelement mit dem Sockel zusammen entsorgt werden muss. Nachteilig ist weiterhin, dass durch die Ausrichtungen der Federenden in der Einschubrichtung und deren Abstand zum Sockel das Risiko eines Verkantens und somit auch des Abbrechens der Federbereiche erhöht ist. Die Montage des Sockels im Tragring ist somit erschwert, insbesondere auch, da das Rastelement bei der Montage für einen Installateur durch den Sockel verdeckt ist. Insgesamt ist das korrekte Ausrichten des Sockels zum Tragring bei der Montage nur mit erhöhtem Aufwand und/oder entsprechendem Geschick möglich. Die Möglichkeit einer intuitiven Montage ist nicht gegeben. Dadurch, dass der Sockel und das Rastelement aus demselben Material bestehen, muss ein Kompromiss zwischen den vorgesehenen Eigenschaften für den Sockel, z.B. dessen elektrischer Isolierfähigkeit, und denen des Rastelementes, z.B. dessen Federwirkung auch über eine lange Einsatzzeit, gefunden werden.

Im Stand der Technik sind weiterhin separate Rastelemente bekannt, welche aus einem Metallblech konstanter Dicke durch entsprechendes Stanzen und Biegen hergestellt sind.

Nachteilig bei solchen metallischen Rastelementen ist das Risiko der Beschädigung von stromführenden Leitern bei der Montage des Elektro-Installationsgerätes durch scharfe Schnittkanten an dem Rastelement, die beim Stanzen des Metallbleches entstehen. Da sich das metallische Rastelement im montierten Zustand am ebenfalls metallischen Tragring abstützt, ist ein gewisses Risiko gegeben, dass nach einer solchen Beschädigung der stromführenden Leiter eine elektrische Verbindung zum Tragring erzeugt ist. Solche metallischen Rastelemente sind weiterhin nachteilig, weil zwischen dem Rastelement und strom- bzw. spannungsführenden Bauteilen und/oder strom- bzw. spannungsführenden Bereichen des Elektro-Installationsgerätes so genannte Luft- und Kriechstrecken zur Vermeidung von Lichtbogenbildung und zur Vermeidung der Beschädigung elektrischer Bauteile eingehalten werden müssen. Unter Umständen ist eine aufwändige Isolation des metallischen Rastelementes, z.B. mittels abschirmender Geometrien oder zusätzlicher Bauteile, notwendig. Das ist aufwändig und erhöht die Materialkosten und ggf. die Kosten für die Montage. Bei der Verwendung von metallischen Rastelementen ergibt sich weiterhin das Problem, dass ein Risiko des Eindringens von Staub, Feuchtigkeit und/oder Gegenständen in Öffnungen am Sockel erhöht ist, wobei diese Öffnungen notwendig sind, um Rastgeometrien zum Einrasten der metallischen Rastelemente auszubilden. Durch die Herstellung des Rastelementes aus einem Metallblech konstanter Dicke muss mehr Material für das Rastelement bereitgestellt werden als notwendig, da die konstante Dicke den größten Wert aufweist, welcher nur bereichsweise notwendig ist, z.B. welcher notwendig ist, die ausreichende Festigkeit in dem Bereich höchster Belastung sicherzustellen. Eine Erhöhung einer Federwirkung des metallischen Rastelementes kann neben der Erhöhung der Metallblechdicke auch durch eine aufwändige Faltung erreicht werden, was aber mit üblichen Stanz-Biegewerkzeugen unter Umständen nicht ohne Weiteres möglich ist bzw. mit hohen Kosten einhergeht.

Der Erfindung liegt die Aufgabe zugrunde, die Nachteile im Stand der Technik zu vermeiden, zumindest aber zu reduzieren, und insbesondere eine Montage und/oder Demontage des Elektro-Installationsgeräts zu vereinfachen, nämlich eine Montage und/oder Demontage des Elektro-Installationsgeräts selbst, wie auch eine Montage und/oder Demontage des Elektro-Installationsgeräts in einer Montageöffnung einer Wand.

Die Aufgabe wird erfindungsgemäß durch die Merkmale des kennzeichnenden Teils des Anspruchs 1 gelöst, nämlich dadurch, dass das Rastelement sowohl lösbar mit dem Sockel als auch lösbar mit dem Tragring verbindbar oder verbunden ist, wobei das Rastelement mindestens teilweise, insbesondere vollständig aus einem Kunststoff hergestellt ist.

Somit ist die Montage und/oder Demontage des Elektro-Installationsgerätes vereinfacht, nämlich die Montage und/oder Demontage des Elektro-Installationsgeräts selbst, wie auch die Montage und/oder Demontage des Elektro-Installationsgeräts in der Montageöffnung einer Wand. Durch verschiedene Rastelemente sind baugleiche Sockel mit unterschiedlich ausgebildeten Tragringen sicher verbindbar. Somit sind Kostenvorteile bei der Herstellung des Sockels durch größere Stückzahlen erzielbar. Weiterhin kann auch derselbe Sockel nacheinander mit unterschiedlich ausgeprägten Tragringen verbunden werden, wobei lediglich das Rastelement gegen ein passendes ausgetauscht werden muss. So kann die Einsatzdauer des Sockels verlängert werden.

Dadurch, dass das Rastelement zumindest teilweise, insbesondere vollständig, aus einem Kunststoff hergestellt ist, sind Luft- und Kriechstrecken z.B. zwischen einem metallischen Tragring und spannungsführenden Bauteilen leicht einhaltbar, da das Rastelement dann nichtleitend ist und somit keine zusätzlichen abschirmenden bzw. isolierenden Geometrien oder zusätzlichen abschirmenden bzw. isolierenden Bauteile benötigt werden, insbesondere im Vergleich zu einem metallischen Rastelement. Die geometrischen Gestaltungsmöglichkeiten von Kunststoff sind hoch, insbesondere bei im Spritzgussverfahren hergestellten Bauteilen im Vergleich zu im Stanz- und Biegeverfahren hergestellten Bauteilen aus Metall. Somit können bei Verwendung von Kunststoff leicht spezielle, hilfreiche Geometrien erzeugt werden. Kunststoff kann verschiedene Farben aufweisen. Z.B. ist durch eine helle Farbgebung die Montage des dann hellen Rastelementes vereinfacht, was insbesondere bei schlechten Licht- und Sichtverhältnissen am Montageort vorteilhaft ist. Wenn neben dem Rastelement auch der Sockel mindestens teilweise, insbesondere vollständig, aus Kunststoff hergestellt ist, dann können zur deren Herstellung gleiche oder zumindest gleichartige Maschinen, insbesondere Spritzgussmaschinen genutzt werden, wobei für den Sockel und das Rastelement lediglich unterschiedliche Werkzeuge einer solchen Spritzgussmaschine verwendet werden müssen.

In einer vorteilhaften Ausführungsform der Erfindung weist das Rastelement einen Haltebereich zur lösbaren Verbindung mit dem Sockel und einen Federbereich zur lösbaren Verbindung mit dem Tragring auf. Der Haltebereich geht unter Ausbildung eines Winkels in den Federbereich über. Der Federbereich weist ein dem Haltebereich abgewandtes Ende auf. Im verbundenen Zustand von dem Rastelement mit dem Sockel ist das Ende des Federbereiches entgegen einer Einschubrichtung ausgerichtet, in welcher der Sockel in den Tragring einschiebbar ist.

Somit ist das Ende des Federbereiches gegen ein Verkanten und/oder ein Abbrechen geschützt und eine Beschädigung des Federbereiches bei der Montage ist vermieden. Durch die Ausrichtung des Endes des Federbereiches entgegen der Einschubrichtung wird der Sockel beim Einschieben in den Tragring durch Kontakt mit dem Rastelement mittig zum Tragring ausgerichtet, auch wenn ein Installateur den Sockel zunächst außermittig an den Tragring ansetzt. Anders ausgedrückt ist durch die Ausrichtung des Endes des Federbereiches entgegen der Einschubrichtung die Möglichkeit einer intuitiven Montage gegeben.

In einer vorteilhaften Ausführungsform der Erfindung weist der Federbereich in einer Richtung senkrecht zur Einschubrichtung im verbundenen Zustand des Rastelementes zumindest abschnittsweise einen Abstand zum Sockel auf. Der Federbereich ist derart ausgebildet, dass er sich beim Einschieben des Sockels in den Tragring in Richtung des Sockels durch Kontakt mit dem Tragring elastisch verformt, so dass im verbundenen Zustand von dem Rastelement mit dem Tragring eine Klemmkraft zwischen dem Federbereich und dem Tragring angrenzend zur Halteaussparung wirkt.

Somit ist eine Montage und/oder Demontage des Sockels weiter vereinfacht. Neben dem Rastelement sind keine weiteren Bauteile notwendig. Im verbundenen Zustand ist das Rastelement im Tragring eingerastet. Der Federbereich ragt im verbundenen Zustand zum Teil in die Halteaussparung hinein. Beim Montieren des Elektro-Installationsgerätes wird zunächst das Rastelement mit dem Sockel verbunden. Vorher oder nachher wird der Tragring in einer Montageöffnung einer Wand befestigt. Dann wird der Sockel in den Tragring eingeschoben und somit mit dem Tragring verbunden.

In einer vorteilhaften Ausführungsform der Erfindung weist der Haltebereich zwei zueinander beabstandete Klemmhaken auf, mittels welcher das Rastelement im mit dem Sockel verbundenen Zustand an am Sockel ausgebildeten Anschlagbereichen gegenüber einem unerwünschten Lösen des Rastelementes vom Sockel abgestützt ist.

Somit ist die Montage und/oder die Demontage des Rastelementes weiter vereinfacht. Die Klemmhaken werden vorteilhafterweise bei der Montage des Rastelementes in zueinander entgegengesetzten Richtungen elastisch verformt und die Klemmhaken verformen sich zum Erreichen des verbundenen Zustands zumindest zum Teil zurück, um den Kontakt mit und somit die Abstützung an den Anschlagbereichen zu erzeugen.

In einer vorteilhaften Ausführungsform der Erfindung weist der Sockel an einem in Einschubrichtung liegenden Ende einen Boden auf. In dem Boden sind zumindest zwei Durchgangsöffnungen ausgebildet. Ein jeder Klemmhaken durchdringt im verbundenen Zustand des Rastelements eine der Durchgangsöffnungen. Der Haltebereich überdeckt im verbundenen Zustand des Rastelementes die Durchgangsöffnungen.

Somit ist erfolgreich vermieden, dass Staub, Feuchtigkeit und/oder Gegenstände die Durchgangsöffnungen durchdringen. Elektrische Funktionselemente können so vor Staub, Feuchtigkeit und/oder vor einer Beschädigung durch Gegenstände geschützt werden. Der IP-Schutz kann durch diese Maßnahme verbessert werden. Dadurch, dass das Rastelement zumindest teilweise, insbesondere vollständig, aus Kunststoff besteht, ist der Haltebereich einfach auf eine derartige Weise ausbildbar, insbesondere bei einer Herstellung des Rastelementes in einem Spritzgussverfahren.

In einer vorteilhaften Ausführungsform der Erfindung ist mittels des Sockels ein Aufnahmeraum ausgebildet, in welchem das elektrische Funktionselement zumindest zum Teil angeordnet ist, wobei jeder Anschlagbereich an einem Dom ausgebildet ist. Die Dome ragen jeweils vom Boden aus in den Aufnahmeraum hinein.

Die Abmaße solcher Dome sind einfach mit hoher Genauigkeit herstellbar, insbesondere im Gegensatz zur Dicke des Bodens. Dies trifft in besonderem Maße zu, wenn der Sockel in einem Spritzgussverfahren zumindest teilweise, insbesondere vollständig, aus Kunststoff hergestellt wird. Weiterhin sind durch solche Dome günstige Hebelwirkungen zur elastischen Verformung der Klemmhaken bei der Montage des Rastelementes erreichbar, insbesondere da die Klemmhaken aufgrund der Dome eine entsprechende Länge aufweisen. Die Anschlagbereiche sind vorzugsweise an den dem Boden abgewandten Enden der Dome ausgebildet.

In einer vorteilhaften Ausführungsform der Erfindung weist das Rastelement an dem vom Haltebereich abgewandten Ende des Federbereiches einen wulstförmigen Stegbereich auf, welcher sich im Wesentlichen über die gesamte hier ausgebildete Breite des Rastelements erstreckt und an welchem eine Abstützfläche ausgebildet ist. Mit im Wesentlichen ist in diesem Zusammenhang gemeint, dass der Stegbereich um bis zu 10 % kürzer sein kann als die gesamte Breite. Der Stegbereich kontaktiert den Sockel mit der Abstützfläche zumindest im verbundenen Zustand vom Sockel mit dem Tragring.

Durch den Stegbereich ist die elastische Verformung des Federbereiches besonders gleichmäßig möglich. Verdrehungen des Federbereichs und damit einhergehende Verspannungen können vermieden werden. Ein asymmetrisches Verformen des Federbereiches ist durch den Stegbereich vermieden. Durch den Kontakt zwischen dem Stegbereich und dem Sockel kann weiterhin die Federkraft des Federbereiches deutlich erhöht werden, da der Federbereich dann nicht nur im Übergang zum Haltebereich, sondern eben auch an der Abstützfläche abgestützt ist. Somit ist dann weniger Material zur Ausbildung des Federbereichs notwendig.

In einer vorteilhaften Ausführungsform der Erfindung kontaktiert der Stegbereich den Sockel auch im nicht verbundenen Zustand des Sockels mit der Abstützfläche.

Dann tritt die vorteilhaft hohe Federkraft des Federbereichs schon beim ersten Kontakt zwischen dem Federbereich und dem Tragring auf. Die Risiken von Verdrehungen des Federbereichs und damit einhergehende Verspannungen sind weiter reduziert.

In einer vorteilhaften Ausführungsform der Erfindung sind zwei vorzugsweise baugleiche Rastelemente spiegelsymmetrisch zueinander mit dem Sockel auf zwei einander gegenüberliegenden Seiten des Sockels jeweils lösbar mit dem Sockel verbindbar oder verbunden.

Die von dem Tragring hin zu den Rastelementen wirkenden Kräfte sind ebenso spiegelsymmetrisch zueinander ausgerichtet und wirken insbesondere in entgegengesetzten Richtungen jeweils zum Sockel hin. Durch die beiden Rastelemente ist ein Verkanten des Sockels an dem Tragring vermieden. Der Sockel ist durch die beiden Rastelemente auf einfache Weise mittig zum Tragring positionierbar.

Die Aufgabe der Erfindung wird erfindungsgemäß auch durch die Merkmale des kennzeichnenden Teils des Anspruchs 10 gelöst, nämlich dadurch, dass das Rastelement derart ausgebildet ist, dass es sowohl lösbar mit dem Sockel als auch lösbar mit dem Tragring verbindar ist, wobei das Rastelement zumindest teilweise, insbesondere vollständig aus einem Kunststoff hergestellt ist.

Die oben für das Elektro-Installationsgerät mit dem Rastelement beschriebenen Vorteile gelten sinngemäß auch hier. Es kann unabhängig vom Material des Sockels ein passendes Kunststoff-Material mit guten Federeigenschaften für das Rastelement eingesetzt werden. Die separaten Rastelemente können zusammen mit unterschiedlichen Sockeln genutzt werden, wobei lediglich die Bereiche der Sockel, welche zur Verbindung mit dem Rastelement dienen, gleichartig ausgeführt sein müssen. Die zur Verbindung mit dem Rastelement notwendige Geometrie wird festgelegt und bei verschiedenen Sockeln eingesetzt. Da die Maße und Geometrien des Rastelements gleich sind, stellen sich bereits erprobte Halte-, Demontage- und Montagekräfte wiederholend bei unterschiedlichen Sockeln ein. Dies reduziert den Entwicklungsaufwand bei entsprechenden Produktreihen mit unterschiedlichen Sockeln.

In einer vorteilhaften Ausführungsform der Erfindung weist das Rastelement einen Haltebereich zur lösbaren Verbindung mit dem Sockel und einen Federbereich zur lösbaren Verbindung mit dem Tragring auf. Der Haltebereich geht unter Ausbildung eines Winkels von 95° bis 135° in den Federbereich über.

Somit ist der Haltebereich mit einem Boden des Sockels verbindbar und der Federbereich dann zumindest zum Teil beabstandet zu einer Seitenwand des Sockels anordenbar. Im montierten Zustand auf den Federbereich wirkende Kräfte führen dann nicht zu einer Beeinträchtigung der mittels des Haltebereichs realisierten Verbindung zum Sockel.

In einer vorteilhaften Ausführungsform der Erfindung weist der Federbereich zumindest eine Aussparung zur Erzeugung einer bestimmten Federkennlinie auf.

Durch die Aussparung ist weiterhin eine Breite des Federbereiches senkrecht zur Einschubrichtung vergrößerbar, so dass das Risiko des Verkantens des Federbereiches oder das Risiko des Verdrehens des Federbereiches bei der Montage verringert ist. Durch die bestimmte Federkennlinie sind vorgesehene Halte-, Montage- und/oder Demontagekräfte und auch deren Verlauf bei der Montage realisiert. Die Montage und/oder Demontage ist insbesondere ohne oder mit nur einfachen Werkzeugen möglich. Die Haltekräfte sind so hoch, dass eine unbeabsichtigte Demontage im Gebrauch des montierten Elektro-Installationsgeräts vermieden ist. Die genannte Demontagekraft wird auch als Abzugskraft bezeichnet.

In einer vorteilhaften Ausführungsform der Erfindung weist der Federbereich, insbesondere zwischen dem Haltebereich und einem an dem vom Haltebereich abgewandten Ende des Federbereiches ausgebildeten wulstförmigen Stegbereich, eine im Wesentlichen konstante Dicke auf. Mit im Wesentlichen ist in diesem Zusammenhang gemeint, dass die Dicke um bis zu 10 % von einem konstanten mittleren Wert abweichen kann. Derartige Variationen der Dicke sind insbesondere nicht intendiert, sondern beruhen auf Fertigungstoleranzen bei der Herstellung des Federbereiches.

Durch die konstante Dicke können die Spannungen im Material des Federbereiches vergleichmäßigt werden. Der Spannungsverlauf weist dann insbesondere keine Spannungsspitzen oder Bereiche überhöhter Spannung auf. Ein Spannungsabbau über die Zeit aufgrund von Alterungsvorgängen im Kunststoff ist somit verringert, so dass die Lebensdauer des Rastelements steigt.

In einer vorteilhaften Ausführungsform der Erfindung variiert die Dicke des Federbereiches zum Erreichen einer bestimmten Federkennlinie. Insbesondere sind bereichsweise Verdickungen des Federbereiches vorgesehen.

So können beispielsweise verschieden elastische bzw. verschieden steife Abschnitte des Federbereichs erzeugt werden. Die Federkennlinie kann dann besonders viele verschiedene Ausprägungen aufweisen. Die Funktionalität des Rastelements ist erweitert, z.B. können durch Variierung der Dicke besonders große Unterschiede zwischen den Halte-, Montage- und/oder Demontagekräften erzeugt werden.

In einer vorteilhaften Ausführungsform der Erfindung weist der Federbereich an seiner Außenseite, welche zum Kontakt mit dem Tragring vorgesehen ist, eine Oberflächenstruktur mit Erhebungen und/oder Einkerbungen zum Erzeugen eines bestimmten Reibungskoeffizienten zum Tragring auf.

Insbesondere bei der Herstellung des Rastelementes im Spritzgussverfahren kann eine solche Oberflächenstruktur einfach durch entsprechende Ausprägung des Spritzgusswerkzeuges erzeugt werden, wobei kein zusätzlicher Verfahrensschritt bei der Herstellung des Rastelementes notwendig ist. Es muss lediglich das Negativ der Oberflächenstruktur einmalig in das Spritzgusswerkzeug eingebracht werden, mittels welchem dann eine hohe Stückzahl an Rastelementen herstellbar ist. Somit kann mit geringem Aufwand Einfluss auf den Reibungskoeffizienten zum Tragring und damit auf die Halte-, Montage- und/oder Demontagekräfte genommen werden.

In einer vorteilhaften Ausführungsform der Erfindung ist das Rastelement einteilig und insbesondere als Spritzgussbauteil ausgeführt.

Somit ist eine Montage des Elektro-Installationsgeräts einfach und schnell möglich, insbesondere im Gegensatz zu einem mehrteiligen Rastelement. Insbesondere im Spritzgussverfahren können die Kanten des Rastelementes einfach verrundet werden, so dass eine Beschädigung stromführender Leiter durch scharfe Kanten bei der Montage vermieden ist. Im Spritzgussverfahren sind die geometrischen Gestaltungsmöglichkeiten von Kunststoff bei geringem Aufwand trotzdem hoch.

In einer vorteilhaften Ausführungsform der Erfindung ist das Rastelement aus einem Polycarbonat mit einem Glasfaseranteil von 9 % bis 11 %, insbesondere von 10 %, hergestellt.

Ein derartiger Kunststoff weist bei dessen Alterung eine geringe Neigung zum Fließen auf. Die Halte-, Montage- und/oder Demontagekräfte nehmen im Lebenszyklus des Rastelementes dann nur wenig ab. Ein weiterer Vorteil des genannten Kunststoffes sind ein hoher Zug-Modul, eine hohe Streckspannung und eine hohe Streckdehnung. Polycarbonat hat weiterhin den Vorteil, dass bei einer Glühdrahtprüfung die Temperatur von 850 °C normkonform eingehalten werden kann.

Bevorzugterweise wird ein bestimmter Anteil an Regranulat verwendet. Ein solches Regranulat kann ohne die erneute Verwendung von Erdöl hergestellt werden, so dass ein Kunststoff-Wertstoffkreislauf geschlossen ist. Es ist ein geringerer Energieaufwand notwendig als bei der Neuproduktion von Kunststoff, so dass CO₂-Ausstoßwerte und Schadstoffemissionen verringert sind.

Weitere vorteilhafte Ausgestaltungen der Erfindung ergeben sich aus der folgenden Figurenbeschreibung und den abhängigen Unteransprüchen.

Es zeigen:
- Fig. 1a: in schematischer Darstellung eine erfindungsgemäße Ausführungsform eines Elektro-Installationsgerätes mit einem Rastelement gemäß einer ersten Ausführungsform in einer Seitenansicht im Schnitt,
- Fig. 1b: in schematischer Darstellung das Elektro-Installationsgerät aus Fig. 1a in einer dreidimensionalen Ansicht,
- Fig. 2a: in schematischer Darstellung separat das Rastelement gemäß seiner ersten Ausführungsform in Fig. 1a in einer dreidimensionalen Ansicht,
- Fig. 2b: in schematischer Darstellung das Rastelement aus Fig. 2a in einer Seitenansicht,
- Fig. 2c: in schematischer Darstellung das Rastelement aus Fig. 2a in einer weiteren dreidimensionalen Ansicht,
- Fig. 3a: in schematischer Darstellung separat ein erfindungsgemäßes Rastelement gemäß einer zweiten Ausführungsform in einer dreidimensionalen Ansicht,
- Fig. 3b: in schematischer Darstellung das Rastelement aus Fig. 3a in einer Seitenansicht,
- Fig. 3c: in schematischer Darstellung das Rastelement aus Fig. 3a in einer weiteren dreidimensionalen Ansicht,
- Fig. 4a: in schematischer Darstellung separat ein erfindungsgemäßes Rastelement gemäß einer dritten Ausführungsform in einer dreidimensionalen Ansicht,
- Fig. 4b: in schematischer Darstellung das Rastelement aus Fig. 4a in einer Seitenansicht, und
- Fig. 4c: in schematischer Darstellung das Rastelement aus Fig. 4a in einer weiteren dreidimensionalen Ansicht.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

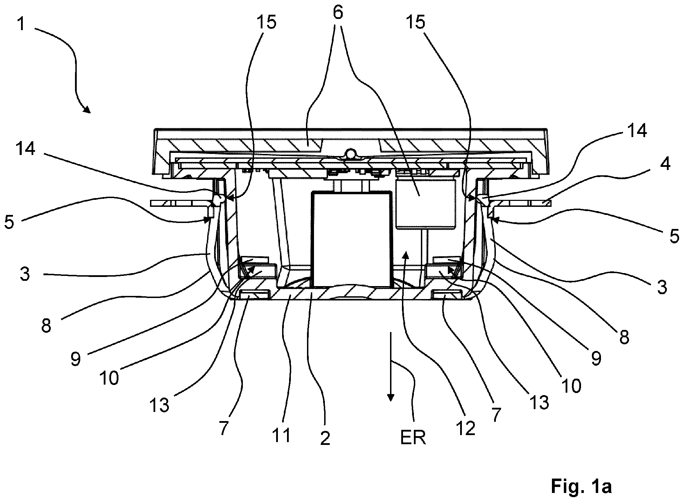

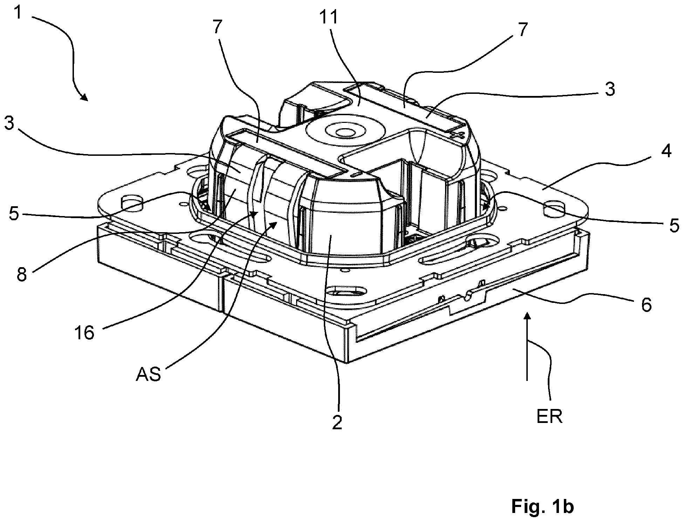

Fig. 1a und Fig. 1b zeigen jeweils ein Elektro-Installationsgerät 1 u.a. mit einem Sockel 2, mit zumindest einem Rastelement 3 und mit einem Tragring 4. Der Sockel 2 ist mit dem Tragring 4 mittels des Rastelementes 3 lösbar verbindbar oder verbunden. Das Rastelement 3 ragt in einem hier gezeigten verbundenen Zustand von dem Sockel 2 mit dem Tragring 4 zum Teil in eine Halteaussparung 5 des Tragrings 4 hinein. Mittels des Sockels 2 wird ein elektrisches Funktionselement 6 aufgenommen und/oder ausgebildet. Der Tragring 4 weist Mittel zur Befestigung in einer Montageöffnung einer Wand eines Gebäudes auf. Das elektrische Funktionselement 6 weist hier einen Schalter, insbesondere einen Wippschalter, auf. Es sind aber auch andere Ausführungen des elektrischen Funktionselementes 6 denkbar. Z.B. könnte das elektrische Funktionselement 6 als ein Taster, eine Steckdose, ein Sensor und/oder dergleichen ausgeführt sein. Die Mittel des Tragrings 4 zur Befestigung in der Montageöffnung sind hier als Langlöcher ausgeführt, so dass der Tragring 4 mit Hilfe von Schrauben an der Wand befestigbar und auch entlang der Langlöcher gegenüber der Wand ausrichtbar ist. Die Mittel des Tragrings zur Befestigung in der Montageöffnung könnten aber auch andersartig ausgeführt sein. Die Halteaussparung 5 durchdringt den Tragring 4 mittig. Angrenzend zur Halteaussparung 5 weist der Tragring 4 einen umlaufenden Kragenbereich auf. Der Tragring 4 ist bevorzugt aus einem metallischen Blech durch Stanzen und/oder Biegen hergestellt. Andere Ausführungen des Tragrings sind aber auch denkbar.

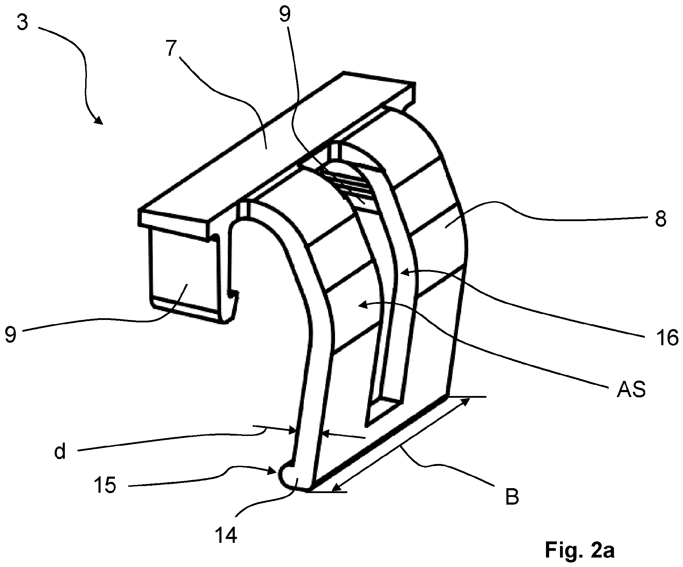

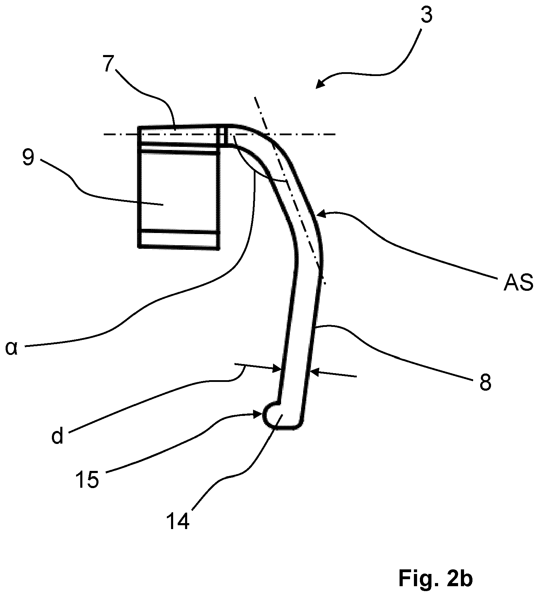

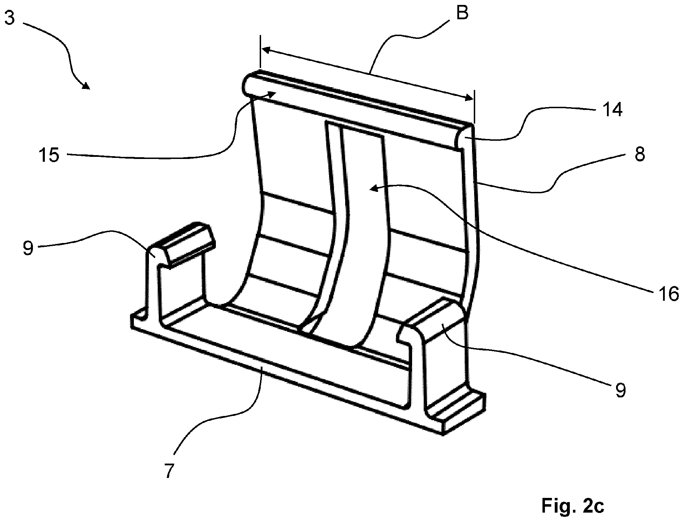

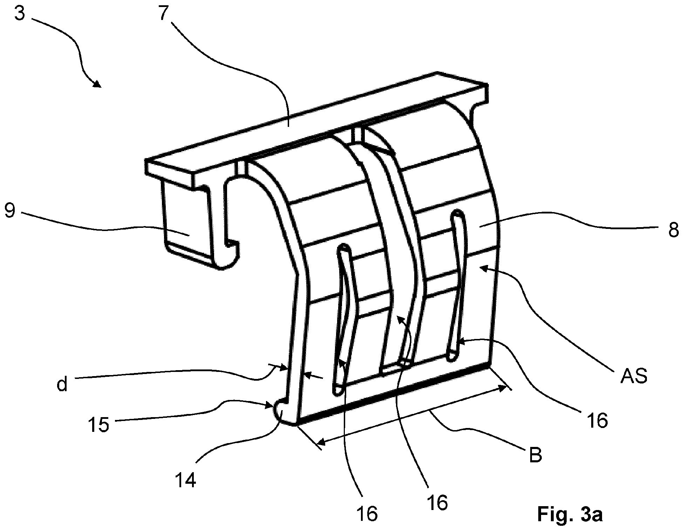

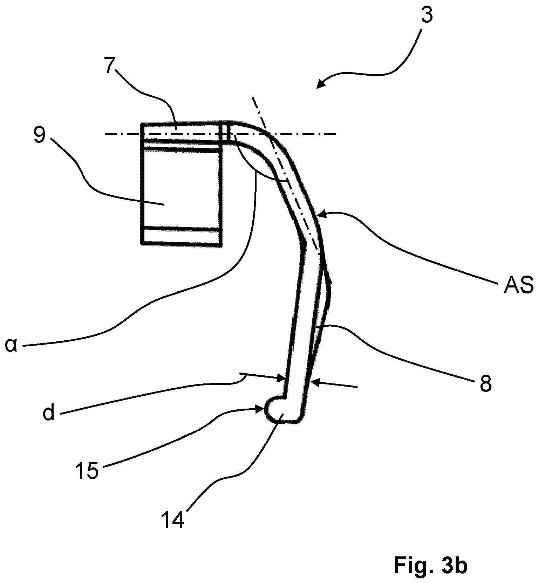

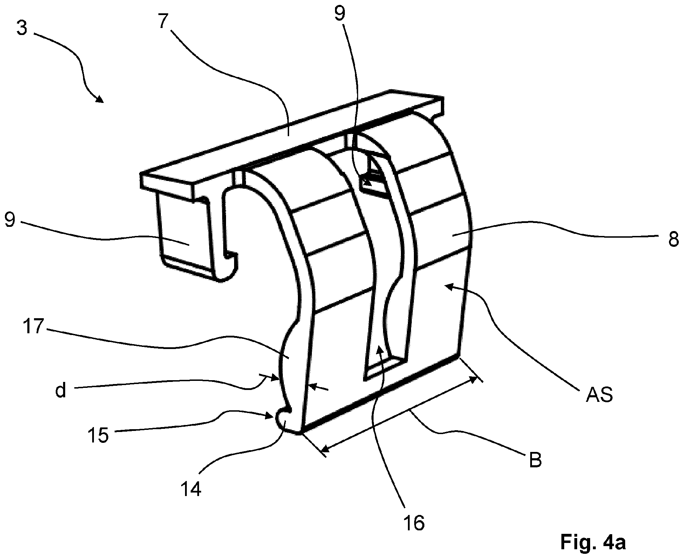

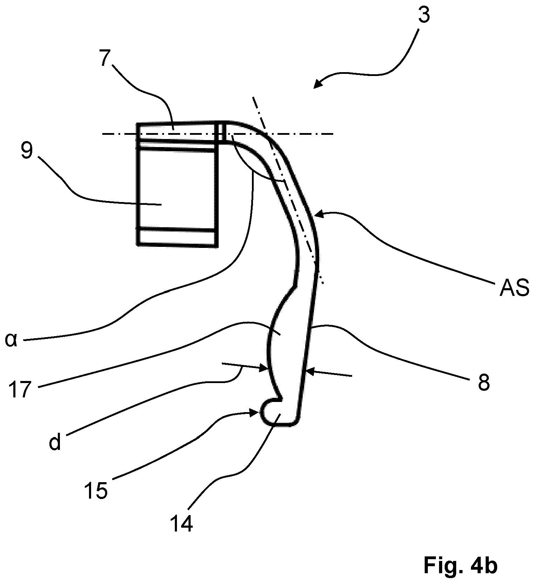

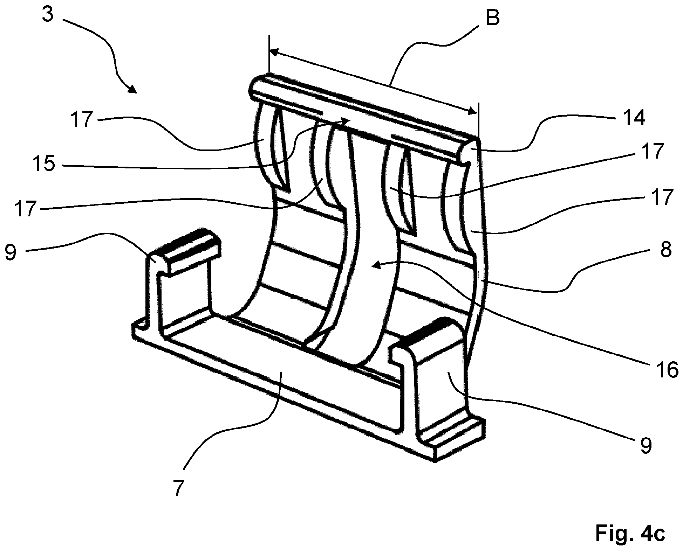

Fig. 2a bis Fig. 4c zeigen das Rastelement 3 jeweils separat, wobei in Fig. 2a bis Fig. 2c eine erste Ausführungsform, in Fig. 3a bis Fig. 3c eine zweite Ausführungsform und in Fig. 4a bis Fig. 4c eine dritte Ausführungsform des Rastelementes 3 gezeigt ist. Fig. 1a und Fig. 1b zeigen das Elektro-Installationsgerät 1 mit dem Rastelement 3 gemäß seiner ersten Ausführungsform. Das Elektro-Installationsgerät 1 gemäß Fig. 1a und Fig. 1b könnte aber auch das Rastelement 3 gemäß seiner zweiten oder dritten Ausführungsform aufweisen.

Das Rastelement 3 ist sowohl lösbar mit dem Sockel 2 als auch lösbar mit dem Tragring 4 verbindbar oder verbunden. Das Rastelement 3 ist mindestens teilweise, insbesondere vollständig, aus einem Kunststoff hergestellt.

Bei der Montage des Elektro-Installationsgeräts 1 wird zunächst das Rastelement 3 mit dem Sockel 2 verbunden. Dann wird der Sockel 2 zusammen mit dem Rastelement 3 mit dem Tragring 4 verbunden. Dazu ist eine bestimmte Montagekraft notwendig, welche üblicherweise von einem Installateur von Hand aufgebracht wird.

Das Rastelement 3 weist einen Haltebereich 7 zur lösbaren Verbindung mit dem Sockel 2 und einen Federbereich 8 zur lösbaren Verbindung mit dem Tragring 4 auf. Der Haltebereich 7 geht unter Ausbildung eines Winkels α in den Federbereich 8 über. Der Federbereich 8 weist ein dem Haltebereich 7 abgewandtes Ende auf. Im verbundenen Zustand von dem Rastelement 3 mit dem Sockel 2 ist das Ende des Federbereiches 8 entgegen einer Einschubrichtung ER, in welcher der Sockel 2 in den Tragring 4 einschiebbar ist, ausgerichtet.

Im montierten Zustand durchdringen der Sockel 2 und der Federbereich 8 die Halteaussparung 5 des Tragrings 4. Die Enden des Federbereiches 8 kommen bei der Montage nicht mit dem Tragring 4 in Kontakt und werden auch nicht durch die Halteaussparung 5 hindurchgeführt, so dass ein Verhaken oder Verkanten der Enden des Federbereiches 8 vermieden ist. Durch die Ausbildung des Winkels α zwischen dem Haltebereich 7 und dem Federbereich 8 ist sichergestellt, dass bei der Montage vornehmlich der Federbereich 8 den Tragring 4 kontaktiert.

Der Federbereich 8 weist in einer Richtung senkrecht zur Einschubrichtung ER im verbundenen Zustand des Rastelementes 3 zumindest abschnittsweise einen Abstand zum Sockel 2 auf. Der Federbereich 8 ist derart ausgebildet, dass er sich beim Einschieben des Sockels 2 in den Tragring 4 in Richtung des Sockels 2 durch Kontakt mit dem Tragring 4 elastisch verformt, so dass im verbundenen Zustand von dem Rastelement 3 mit dem Tragring 4 eine Klemmkraft zwischen dem Federbereich 8 und dem Tragring 4 angrenzend zur Halteaussparung 5 wirkt.

Der Federbereich 8 ist derart ausgebildet, dass er sich beim Einschieben des Sockels 2 in den Tragring 4 zunächst in einer ersten Montagephase unter einer Verkleinerung seines Abstands zum Sockel 2 verformt, um sich anschließend bis zum Erreichen der Zielposition unter einer Vergrößerung seines Abstands zum Sockel 2 zu verformen.

Der Haltebereich 7 weist zwei zueinander beabstandete Klemmhaken 9 auf, mittels welcher das Rastelement 3 im mit dem Sockel 2 verbundenen Zustand an am Sockel 2 ausgebildeten Anschlagbereichen 10 gegenüber einem unerwünschten Lösen des Rastelementes 3 vom Sockel 2 abgestützt ist.

Das Rastelement 3 ist mit dem Sockel 2 durch ein Bewegen in einer der Einschubrichtung ER entgegengesetzten Richtung verbindbar. Die Klemmhaken 9 sind vom Haltebereich 7 aufragend angeordnet. Der Haltebereich 7 selbst ist plattenförmig mit vorzugsweise rechteckigem Umfang ausgebildet. Die auskragenden Enden der Klemmhaken 9 sind unter Ausbildung der jeweiligen Hakenform einander zugewandt. Dem Haltebereich 7 zugewandte Oberflächen dieser auskragenden Enden der Klemmhaken 9 sind für den Kontakt mit den am Sockel 2 ausgebildeten Anschlagbereichen 10 vorgesehen. Im montierten Zustand sind die Klemmhaken 9 an den Anschlagbereichen 10 eingerastet. Die Klemmhaken 9 sind dazu ausgebildet, sich bei der Montage in zueinander entgegengesetzten Richtungen elastisch zu verformen, wobei sich ein Abstand der beiden Enden zunächst vergrößert, um sich beim Einrasten dann wieder zu verkleinern.

Der Sockel 2 weist an einem in Einschubrichtung ER liegenden Ende einen Boden 11 auf. In dem Boden 11 sind zumindest zwei Durchgangsöffnungen ausgebildet. Ein jeder Klemmhaken 9 durchdringt im verbundenen Zustand des Rastelementes 3 eine der Durchgangsöffnungen. Der Haltebereich 7 überdeckt im verbundenen Zustand des Rastelementes 3 die Durchgangsöffnungen.

Der Sockel 2 ist insbesondere topfförmig ausgebildet. Der Boden 11 weist an der in Einschubrichtung ER liegenden Stirnseite eine Ausnehmung auf, in welcher der Haltebereich 7 bei montiertem Rastelement 3 angeordnet ist. Der Haltebereich 7 und die angrenzende Stirnseite des Bodens 11 schließen bündig zueinander ab. Die Durchgangsöffnungen enden in dieser Ausnehmung. Die Klemmhaken 9 sind jeweils mit einem Abstand zu einem benachbarten stirnseitigen Ende des Haltebereiches 7 angeordnet. Der Haltebereich 7 überragt die Klemmhaken 9 in der Richtung, in welcher sich der jeweilige Klemmhaken 9 bei dessen Montage elastisch verformt. So ist auf einfache Weise sichergestellt, dass der Haltebereich 7 im verbundenen Zustand des Rastelementes 3 die Durchgangsöffnungen überdeckt.

Mittels des Sockels 2 ist ein Aufnahmeraum 12 ausgebildet, in welchem das elektrische Funktionselement 6 zumindest zum Teil angeordnet ist. Jeder Anschlagbereich 10 ist an einem Dom 13 ausgebildet, wobei die Dome 13 jeweils vom Boden 11 aus in den Aufnahmeraum 12 hineinragen.

Bei dem hier gezeigten, als Schalter ausgeführten elektrischen Funktionselement 6 ist ein Teil des Funktionselementes 6 in dem Aufnahmeraum 12 angeordnet, wobei ein weiterer Teil des Funktionselementes 6, insbesondere eine Schaltwippe, außerhalb des Aufnahmeraums 12 angeordnet ist. Mittels der Dome 13 ist insbesondere jeweils auch eine im Wesentlichen parallel zur Einschubrichtung ER ausgerichtete Gleitfläche ausgebildet, an welchen die Klemmhaken 9 bei der Montage des Rastelementes 3 mit ihren auskragenden Enden entlanggleiten. Die Dome 13 sind einteilig mit dem Boden 11 ausgeführt. Der Boden 11 geht in die Dome 13 über.

Das Rastelement 3 weist an dem vom Haltebereich 7 abgewandten Ende des Federbereiches 8 einen wulstförmigen Stegbereich 14 auf, welcher sich im Wesentlichen über die gesamte hier ausgebildete Breite B des Rastelementes 3 erstreckt und an welchem eine Abstützfläche 15 ausgebildet ist. Der Stegbereich 14 kontaktiert den Sockel 2 mit der Abstützfläche 15 zumindest im verbundenen Zustand vom Sockel 2 mit dem Tragring 4. Die Abstützfläche 15 ist konvex gekrümmt ausgeführt. Die Breite B ist senkrecht zur Einschubrichtung ER ausgebildet.

Der Stegbereich 14 kontaktiert den Sockel 2 auch im nicht verbundenen Zustand des Sockels 2 mit der Abstützfläche 15. Der Federbereich 8 weist einen ersten Abschnitt angrenzend zum Haltebereich 7 auf, der in einen zweiten Abschnitt angrenzend des Stegbereiches 14 übergeht, wobei sich vom Haltebereich 7 gesehen der Abstand des Federbereiches 8 zum Sockel 2 im ersten Abschnitt vergrößert und im zweiten Abschnitt wieder verkleinert, wenn das Rastelement 3 am Sockel 2 montiert ist.

Zwei vorzugsweise baugleiche Rastelemente 3 sind spiegelsymmetrisch zueinander mit dem Sockel 2 auf zwei einander gegenüberliegenden Seiten des Sockels 2 jeweils lösbar mit dem Sockel 2 verbindbar oder verbunden. Die zur Verbindung mit dem jeweiligen Rastelement 3 am Sockel 2 vorgesehenen Mittel, wie z.B. die Anschlagbereiche 10, die Dome 13, die Durchgangsöffnungen und/oder die Ausnehmungen im Boden für die Haltebereiche 7 sind ebenso spiegelsymmetrisch zueinander angeordnet bzw. ausgebildet. Durch die spiegelsymmetrisch zueinander angeordneten Rastelemente 3 ist der Sockel 2 einfach im Tragring 4 zentrierbar.

Fig. 2a bis Fig. 4c zeigen jeweils separat ein Rastelement 3 für das im Vorhinein beschriebene Elektro-Installationsgerät 1, wobei der Sockel 2 des Elektro-Installationsgerätes 1 mit dem Tragring 4 des Elektro-Installationsgerätes 1 mittels des Rastelementes 3 lösbar verbindbar ist. Das Rastelement 3 ist derart ausgebildet, dass es sowohl lösbar mit dem Sockel 2 als auch lösbar mit dem Tragring 4 verbindbar ist. Das Rastelement 3 ist mindestens teilweise, insbesondere vollständig, aus einem Kunststoff hergestellt.

Das Rastelement 3 weist einen Haltebereich 7 zur lösbaren Verbindung mit dem Sockel 2 und einen Federbereich 8 zur lösbaren Verbindung mit dem Tragring 4 auf. Der Haltebereich 7 geht unter Ausbildung eines Winkels α von 95° bis 135° in den Federbereich 8 über. Dieser Winkel α ist insbesondere zwischen einer durch den plattenförmigen Haltebereich 7 gebildeten Ebene und einer durch den ersten Abschnitt des Federbereiches 8 gebildeten Ebene ausgebildet.

Der Federbereich 8 weist zumindest eine Aussparung 16 zur Erzeugung einer bestimmten Federkennlinie auf. Gemäß der ersten und dritten Ausführungsform des Rastelementes 3 weist der Federbereich 8 jeweils nur eine Aussparung 16 auf. Gemäß der zweiten Ausführungsform des Rastelementes 3 weist der Federbereich 8 drei Aussparungen 16 auf. Denkbar wäre auch, zwei oder mehr als drei Aussparungen vorzusehen, wenn sich das positiv auf die Federkennlinie und somit auf die Kräfte im Verlauf der Montage bzw. Demontage und/oder die Haltekräfte im Einsatz bzw. bei montiertem Rastelement auswirkt.

Die oder eine der Aussparungen 16 ist bezüglich der Breite B mittig ausgebildet und erstreckt sich senkrecht zur Breite B über den gesamten Federbereich 8 zwischen dem Haltebereich 7 und dem Stegbereich 14. Man könnte auch sagen, dass zwei vom Haltebereich 7 auskragende, blattfederartige Federelemente mittels des Stegbereiches 14 miteinander verbunden sind. Im montierten Zustand des Rastelementes 3 ragt eine am Sockel 2 ausgebildete Nase in die mittige Aussparung 16 zum Teil hinein, um eine bessere Abstützung zwischen dem Sockel 2 und dem Rastelement 3 zu erreichen.

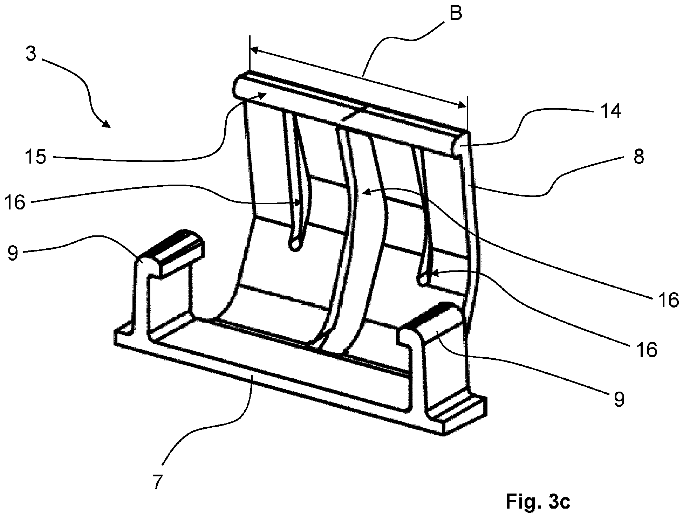

Gemäß Fig. 3a und 3c sind neben der mittigen Aussparung 16 zwei weitere Aussparungen 16 in dem Federbereich 8 ausgebildet, wobei die Haupt-Ausdehnungsrichtungen dieser drei Aussparungen 16 im Wesentlichen parallel zueinander liegen. Die zwei weiteren Aussparungen 16 liegen auf einander gegenüberliegenden Seiten der mittigen Aussparung 16 und sind jeweils kleiner und/oder kürzer ausgeführt als die mittige Aussparung 16. Auf den einander gegenüberliegenden Längsseiten der kürzeren Ausnehmungen 16 sind unterschiedliche Abstände des Federbereiches 8 zum Sockel 2 ausbildbar. Das Rastelement 3 ist gegenüber einer senkrecht zur Breitenrichtung liegenden, mittleren Ebene spiegelsymmetrisch ausgebildet, was für alle drei Ausführungsformen gilt.

Der Federbereich 8 weist gemäß Fig. 2a bis 2c sowie auch gemäß Fig. 3a bis 3c, insbesondere zwischen dem Haltebereich 7 und dem an dem vom Haltebereich 7 abgewandten Ende des Federbereiches 8 ausgebildeten wulstförmigen Stegbereich 14, eine im Wesentlichen konstante Dicke d auf. Die Dicke d ist zwischen einer Außenseite AS des Federbereiches 8 und einer gegenüberliegenden Innenseite, nämlich einer dem Sockel 2 zuwendbaren Seite des Federbereiches 8 messbar. Der Federbereich 8 ist teils gebogen ausgeführt, insbesondere im Übergang zum Haltebereich 7 und im Übergang zwischen den beiden Abschnitten des Federbereiches 8.

Gemäß Fig. 4a bis 4c variiert die Dicke d des Federbereiches 8 zum Erreichen einer bestimmten Federkennlinie. Insbesondere sind bereichsweise Verdickungen 17 des Federbereiches 8 vorgesehen. In Breitenrichtungen sind vier gleichartige Verdickungen 17 vorgesehen. In Breitenrichtungen sind die Verdickungen 17 beabstandet zueinander angeordnet. Die Verdickungen 17 sind im montierten Zustand dem Sockel 2 zugewandt bzw. an einer Innenseite des Federbereichs 8 ausgebildet. Zwei in Breitenrichtung äußere Verdickungen 17 bilden in Breitenrichtung das jeweilige Ende des Rastelementes 3. Zwei in Breitenrichtung innere Verdickungen 17 grenzen an die Ausnehmung 16 an. Die Verdickungen 17 sind zylindersektorförmig ausgebildet. Die Verdickungen 17 grenzen unmittelbar an den Stegbereich 14 an. Andere Ausbildungen der Verdickungen 17 sind demgegenüber auch denkbar. Z.B. könnte eine Verdickung an der Außenseite des Federbereiches ausgebildet sein. Weiterhin ist denkbar, mehrere rippenartige Verdickungen vorzusehen. Anstelle solcher bereichsweisen Verdickungen könnte sich die Dicke auch kontinuierlich verändern. Die Dicke könnte sich kontinuierlich über den gesamten Federbereich hinweg verändern. Die Dicke könnte sich auch kontinuierlich über den einen der Abschnitte des Federbereichs hinweg verändern.

Der Federbereich 8 könnte an seiner Außenseite AS, welche zum Kontakt mit dem Tragring 4 vorgesehen ist, eine hier nicht gezeigte Oberflächenstruktur mit Erhebungen und/oder Einkerbungen zum Erzeugen eines bestimmten Reibungskoeffizienten zum Tragring 4 aufweisen.

Das Rastelement 3 ist einteilig und insbesondere als Spritzgussbauteil ausgeführt. Andere Herstellungsverfahren als das Spritzgussverfahren, z.B. additive Fertigungsverfahren, sind auch denkbar.

Das Rastelement 3 ist aus einem Polycarbonat mit einem Glasfaseranteil von 9 % bis 11 %, insbesondere von 10 %, hergestellt.

Alternativ könnte das Rastelement 3 auch aus einem Polyoxymethylen (POM) hergestellt sein. Der Einsatz weiterer Kunststoffe ist auch denkbar.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Elektro-Installationsgerät
- 2: Sockel
- 3: Rastelement
- 4: Tragring
- 5: Halteaussparung des Tragrings 4
- 6: elektrisches Funktionselement
- 7: Haltebereich des Rastelementes 3
- 8: Federbereich des Rastelementes 3
- 9: Klemmhaken des Haltebereiches 7
- 10: Anschlagbereich des Sockels 2
- 11: Boden
- 12: Aufnahmeraum
- 13: Dom
- 14: wulstförmiger Stegbereich
- 15: Abstützfläche
- 16: Aussparung des Federbereiches 8
- 17: Verdickungen des Federbereiches 8

- α: Winkel
- ER: Einschubrichtung
- B: Breite des Rastelementes 3
- d: Dicke des Federbereiches 8
- AS: Außenseite des Federbereiches 8

## Patentansprüche

1. Elektro-Installationsgerät (1) mit einem Sockel (2), mit zumindest einem Rastelement (3) und mit einem Tragring (4), wobei der Sockel (2) mit dem Tragring (4) mittels des Rastelementes (3) lösbar verbindbar oder verbunden ist, wobei das Rastelement (3) in einem verbundenen Zustand von dem Sockel (2) mit dem Tragring (4) zum Teil in eine Halteaussparung (5) des Tragrings (4) hineinragt, wobei mittels des Sockels (2) ein elektrisches Funktionselement (6) aufgenommen und/oder ausgebildet wird, wobei der Tragring (4) Mittel zur Befestigung in einer Montageöffnung einer Wand eines Gebäudes aufweist,
**dadurch gekennzeichnet, dass** das Rastelement (3) sowohl lösbar mit dem Sockel (2) als auch lösbar mit dem Tragring (4) verbindbar oder verbunden ist, wobei das Rastelement (3) aus Kunststoff hergestellt ist.

2. Elektro-Installationsgerät (1) nach Anspruch 1,
**dadurch gekennzeichnet, dass** das Rastelement (3) einen Haltebereich (7) zur lösbaren Verbindung mit dem Sockel (2) und einen Federbereich (8) zur lösbaren Verbindung mit dem Tragring (4) aufweist, wobei der Haltebereich (7) unter Ausbildung eines Winkels (α) in den Federbereich (8) übergeht, wobei der Federbereich (8) ein dem Haltebereich (7) abgewandtes Ende aufweist, wobei im verbundenen Zustand von dem Rastelement (3) mit dem Sockel (2) das Ende des Federbereiches (8) entgegen einer Einschubrichtung (ER), in welcher der Sockel (2) in den Tragring (4) einschiebbar ist, ausgerichtet ist.

3. Elektro-Installationsgerät (1) nach Anspruch 2,
**dadurch gekennzeichnet, dass** der Federbereich (8) in einer Richtung senkrecht zur Einschubrichtung (ER) im verbundenen Zustand des Rastelements (3) zumindest abschnittsweise einen Abstand zum Sockel (2) aufweist, wobei der Federbereich (8) derart ausgebildet ist, dass er sich beim Einschieben des Sockels (2) in den Tragring (4) in Richtung des Sockels (2) durch Kontakt mit dem Tragring (4) elastisch verformt, so dass im verbundenen Zustand von dem Rastelement (3) mit dem Tragring (4) eine Klemmkraft zwischen dem Federbereich (8) und dem Tragring (4) angrenzend zur Halteaussparung (5) wirkt.

4. Elektro-Installationsgerät (1) nach Anspruch 2 oder 3,
**dadurch gekennzeichnet, dass** der Haltebereich (7) zwei zueinander beabstandete Klemmhaken (9) aufweist, mittels welcher das Rastelement (3) im mit dem Sockel (2) verbundenen Zustand an am Sockel (2) ausgebildeten Anschlagbereichen (10) gegenüber einem unerwünschten Lösen des Rastelementes (3) vom Sockel (2) abgestützt ist.

5. Elektro-Installationsgerät (1) nach Anspruch 4,
**dadurch gekennzeichnet, dass** der Sockel (2) an einem in Einschubrichtung (ER) liegenden Ende einen Boden (11) aufweist, wobei in dem Boden (11) zumindest zwei Durchgangsöffnungen ausgebildet sind, wobei ein jeder Klemmhaken (9) im verbundenen Zustand des Rastelements (3) eine der Durchgangsöffnungen durchdringt, wobei der Haltebereich (7) im verbundenen Zustand des Rastelementes (3) die Durchgangsöffnungen überdeckt.

6. Elektro-Installationsgerät (1) nach einem der Ansprüche 4 oder 5,
**dadurch gekennzeichnet, dass** mittels des Sockels (2) ein Aufnahmeraum (12) ausgebildet ist, in welchem das elektrische Funktionselement (6) zumindest zum Teil angeordnet ist, wobei jeder Anschlagbereich (10) an einem Dom (13) ausgebildet ist, wobei die Dome (13) jeweils vom Boden (11) aus in den Aufnahmeraum (12) hineinragen.

7. Elektro-Installationsgerät (1) nach einem der Ansprüche 2 bis 6,
**dadurch gekennzeichnet, dass** das Rastelement (3) an dem vom Haltebereich (7) abgewandten Ende des Federbereiches (8) einen wulstförmigen Stegbereich (14) aufweist, welcher sich im Wesentlichen über die gesamte hier ausgebildete Breite (B) des Rastelements (3) erstreckt und an welchem eine Abstützfläche (15) ausgebildet ist, wobei der Stegbereich (14) den Sockel (2) mit der Abstützfläche (15) zumindest im verbundenen Zustand vom Sockel (2) mit dem Tragring (4) kontaktiert.

8. Elektro-Installationsgerät (1) nach Anspruch 7,
**dadurch gekennzeichnet, dass** der Stegbereich (14) den Sockel (2) auch im nicht verbundenen Zustand des Sockels (2) mit der Abstützfläche (15) kontaktiert.

9. Elektro-Installationsgerät (1) nach einem der vorangehenden Ansprüche,
**dadurch gekennzeichnet, dass** zwei vorzugsweise baugleiche Rastelemente (3) spiegelsymmetrisch zueinander mit dem Sockel (2) auf zwei einander gegenüberliegenden Seiten des Sockels (2) jeweils lösbar mit dem Sockel (2) verbindbar oder verbunden sind.

10. Rastelement (3) für ein Elektro-Installationsgerät (1) nach Anspruch 1, wobei der Sockel (2) des Elektro-Installationsgeräts (1) mit dem Tragring (4) des Elektro-Installationsgeräts (1) mittels des Rastelementes (3) lösbar verbindbar ist,
**dadurch gekennzeichnet, dass** das Rastelement (3) derart ausgebildet ist, dass es sowohl lösbar mit dem Sockel (2) als auch lösbar mit dem Tragring (4) verbindbar ist, wobei das Rastelement (3) mindestens teilweise aus einem Kunststoff hergestellt ist.

11. Rastelement (3) nach Anspruch 10,
**dadurch gekennzeichnet, dass** das Rastelement (3) einen Haltebereich (7) zur lösbaren Verbindung mit dem Sockel (2) und einen Federbereich (8) zur lösbaren Verbindung mit dem Tragring (4) aufweist, wobei der Haltebereich (7) unter Ausbildung eines Winkels (α) von 95° bis 135° in den Federbereich (8) übergeht.

12. Rastelement (3) nach Anspruch 11,
**dadurch gekennzeichnet, dass** der Federbereich (8) zumindest eine Aussparung (16) zur Erzeugung einer bestimmten Federkennlinie aufweist.

13. Rastelement (3) nach Anspruch 11 oder 12,
**dadurch gekennzeichnet, dass** der Federbereich (8), insbesondere zwischen dem Haltebereich (7) und einem an dem vom Haltebereich (7) abgewandten Ende des Federbereiches (8) ausgebildeten wulstförmigen Stegbereich (14), eine konstante Dicke (d) aufweist.

14. Rastelement (3) nach Anspruch 11 oder 12,
**dadurch gekennzeichnet, dass** die Dicke (d) des Federbereiches (8) zum Erreichen einer bestimmten Federkennlinie variiert, insbesondere bereichsweise Verdickungen (17) des Federbereiches (8) vorgesehen sind.

15. Rastelement (3) nach einem der Ansprüche 11 bis 14,
**dadurch gekennzeichnet, dass** der Federbereich (8) an seiner Außenseite (AS), welche zum Kontakt mit dem Tragring (4) vorgesehen ist, eine Oberflächenstruktur mit Erhebungen und/oder Einkerbungen zum Erzeugen eines bestimmten Reibungskoeffizienten zum Tragring (4) aufweist.

16. Rastelement (3) nach einem der Ansprüche 10 bis 15,
**dadurch gekennzeichnet, dass** das Rastelement (3) einteilig und insbesondere als Spritzgussbauteil ausgeführt ist.

17. Rastelement (3) nach einem der Ansprüche 10 bis 16,
**dadurch gekennzeichnet, dass** das Rastelement (3) mindestens teilweise aus einem Polycarbonat mit einem Glasfaseranteil von 9 % bis 11 %, insbesondere von 10 %, hergestellt ist.
